(19) Europäisches Patentamt / European Patent Office / Office européen des brevets

(11) **EP 2 909 577 B1**

(12) **EUROPÄISCHE PATENTSCHRIFT**

(45) Veröffentlichungstag und Bekanntmachung des Hinweises auf die Patenterteilung:
**06.10.2021 Patentblatt 2021/40**

(21) Anmeldenummer: **14789984.3**

(22) Anmeldetag: **28.08.2014**

(51) Int Cl.:
**G01B 21/04** *(2006.01)* **G01B 21/08** *(2006.01)*

(86) Internationale Anmeldenummer:
**PCT/DE2014/200431**

(87) Internationale Veröffentlichungsnummer:
**WO 2015/062594 (07.05.2015 Gazette 2015/18)**

(54) **VERFAHREN UND VORRICHTUNG ZUR DICKENMESSUNG AN MESSOBJEKTEN**

METHOD AND DEVICE FOR THICKNESS MEASUREMENT ON MEASUREMENT OBJECTS

PROCÉDÉ ET DISPOSITIF DE MESURE DE L'ÉPAISSEUR SUR DES OBJETS À MESURER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.10.2013 DE 102013221843**
**08.01.2014 DE 102014200157**

(43) Veröffentlichungstag der Anmeldung:
**26.08.2015 Patentblatt 2015/35**

(73) Patentinhaber: **Micro-Epsilon Messtechnik GmbH & Co. KG**
**94496 Ortenburg (DE)**

(72) Erfinder:
• **FUELLMEIER, Herbert**
**84385 Egglham (DE)**
• **SCHALLMOSER, Guenter**
**94099 Ruhstorf (DE)**

(74) Vertreter: **Ullrich & Naumann PartG mbB**
**Schneidmühlstrasse 21**
**69115 Heidelberg (DE)**

(56) Entgegenhaltungen:
**WO-A1-91/15733 WO-A1-2011/000665**
**DE-A1-102009 011 122**

• **None**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 909 577 B1

**Beschreibung**

Die Erfindung betrifft ein Verfahren zur Dickenmessung an Messobjekten im Allgemeinen, wobei mindestens ein Sensor von der Oberseite und mindestens ein weiterer Sensor von der Unterseite gegen das Messobjekt misst. Bei bekanntem Abstand der Sensoren zueinander lässt sich die Dicke des Objekts gemäß der allgemein bekannten Formel D = Gap - (S1 + S2) berechnen, wobei D = Dicke des Messobjekts, Gap = Abstand der Sensoren zueinander, S1 = Abstand des oberen Sensors zur Oberseite des Messobjekts und S2 = Abstand des unteren Sensors zur Unterseite des Messobjekts. Des Weiteren betrifft die Erfindung eine Vorrichtung zur Anwendung des Verfahrens. Ein derartiges Verfahren und eine derartige Vorrichtung sind z.B. aus DE 10 2009 011 122 A1 bekannt.

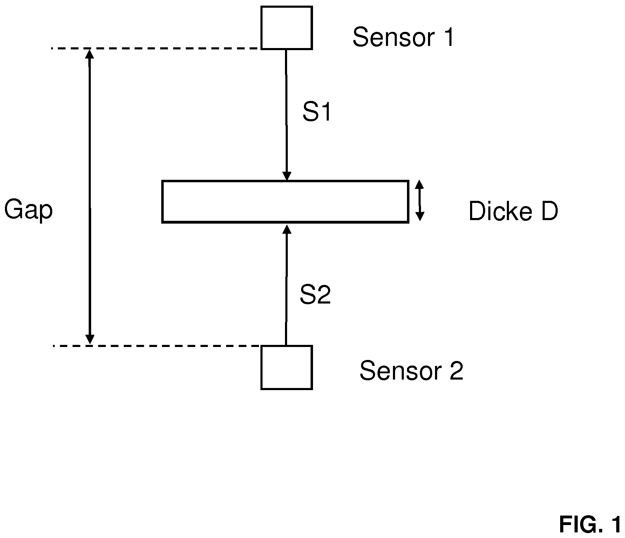

Die Dicke von Messobjekten wird im industriellen Messfeld üblicherweise berührungslos mittels Abstandssensoren gemessen, indem ein Sensor gegen die Oberseite des Messobjektes misst. Ein anderer Sensor misst gegen die Unterseite des Messobjekts. Bei bekanntem Abstand der Sensoren zueinander kann die Dicke entsprechend der voranstehend genannten Formel berechnet werden. Diese rechnerische Beziehung stimmt jedoch nur dann, wenn die Sensoren relativ zueinander und relativ zum Messobjekt in optimaler Weise ausgerichtet sind, wie dies Figur 1 in einer schematischen Ansicht zeigt. In der Praxis gibt es zwei wesentliche Fehlerquellen, nämlich die Verkippung des Messobjekts und/oder der Versatz sowie eine etwaige Verkippung der Sensoren.

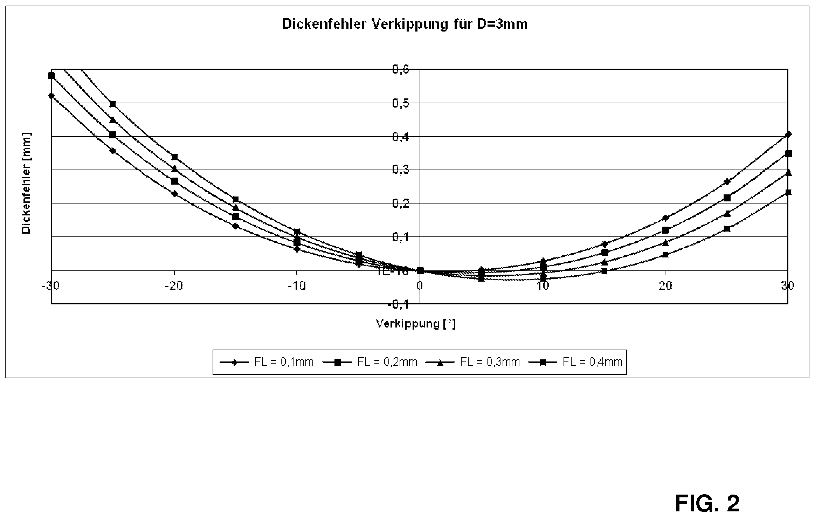

Sobald das Messobjekt verkippt, wird - auch bei idealer Ausrichtung der Sensoren zueinander - eine Dicke gemessen, die größer ist als die tatsächliche Dicke des Messobjekts. Dies resultiert aus dem Winkelfehler. Figur 2 zeigt den diesbezüglichen Messfehler, der bei einer Verkippung des Messobjekts im Winkelbereich von -30° bis +30° entsteht.

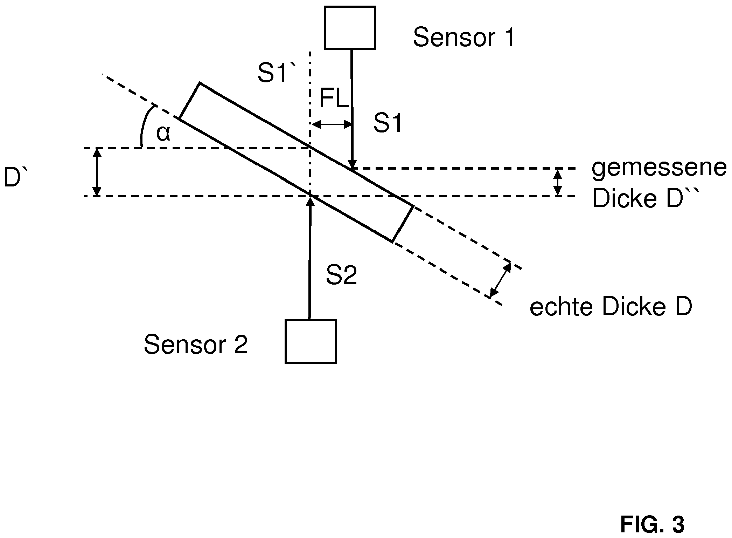

Die zweite Fehlerquelle ist die Ausrichtung der Sensoren zueinander, nämlich dahingehend, ob sie miteinander fluchten und/oder zueinander verkippt sind. Wenn die Sensoren fehlerhaft ausgerichtet sind und deren Messachsen nicht zu 100% übereinander liegen, kommt es bei einer Verkippung des Messobjektes oder bei dessen Verschiebung innerhalb des Messspalts zwischen den Sensoren zu weiteren Abweichungen bei der Berechnung der Dicke. Figur 3 zeigt eine Dickenmessung mit Hilfe zweier gegenüberliegenden Laser-Abstandssensoren, die versetzt zueinander angeordnet sind. Außerdem ist das Messobjekt gekippt, bei gegeneinander versetzten Sensor-Achsen. Zusätzlich kann eine Verkippung der Sensoren auftreten, nämlich ein Winkelfehler in der Ausrichtung der Sensoren, was zu weiteren Messfehlern führt.

Im Idealfall liegen beide Sensoren auf einer Achse, so dass eine Verkippung des Messobjekts immer einen größeren Dickenwert zur Folge hat. Dies lässt sich in der Praxis jedoch nicht erreichen, nämlich aufgrund mechanischer Toleranzen oder aufgrund der Tatsache, dass bei Lasersensoren der Laserpunkt auf dem Messobjekt ganz erheblich streut und dadurch eine Ausrichtung der Lasersensoren erschwert ist. Außerdem entspricht der Laserstrahl nicht exakt der idealen Linearitätsachse des Sensors. In der Praxis kann eine Verkippung des Messobjekts zu einem kleinerem Dickenwert führen, da nämlich der Fehler sowohl abhängig vom Fehler der Laserjustage als auch, absolut gesehen, abhängig von der Dicke des Messobjekts ist.

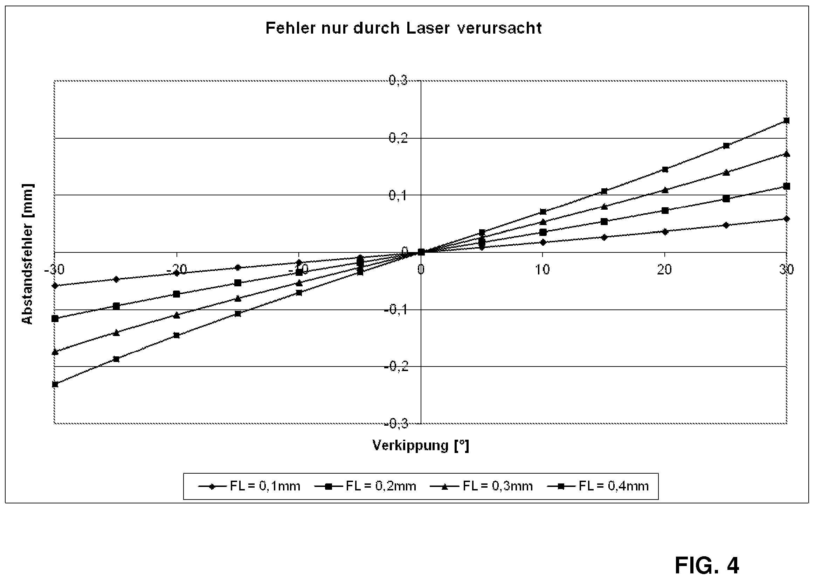

Figur 4 zeigt die Entwicklung des Messfehlers, der nur durch eine fehlerhafte Justage der Sensoren (Abstandssensoren) bedingt ist.

Die voranstehend aufgezeigten Fehler sind Messfehler bei Abstandssensoren, die eine punktförmige Messung durchführen. Analog kann die Dickenmessung auch mit Sensoren erfolgen, die zur Messung eine Linie projizieren (beispielsweise Laser-Linienscanner, Lichtschnittsensoren), oder eine flächenhafte Messung ermöglichen (beispielsweise Matrixanordnungen oder Kameras). Auch bei Verwendung von Laser-Linienscannern wird die Messung dann fehlerhaft, wenn Verkippungen des Messobjekts und gleichzeitig ein Versatz oder eine Verkippung der Sensoren auftritt.

Durch Verwendung von Linienscannern oder flächenhaften Sensoren kann neben dem Abstand auch der Verkippungswinkel des Messobjekts ermittelt werden. Mit Hilfe der zusätzlichen Information betreffend den Verkippungswinkel des Messobjekts ist es möglich, die zuvor aufgezeigten Fehler zu korrigieren, um den Dickenfehler, verursacht durch die Kippung, zu kompensieren.

Die zuvor genannte Methode der Dickenmessung wird üblicherweise in Anlagen mit C-Rahmen oder O-Rahmen verwendet. Beim C-Rahmen sind beide Abstandssensoren mechanisch fest verbunden bzw. einander zugeordnet. Bei traversierender Messung von Objekten größerer Breite wird der gesamte C-Rahmen über das Messobjekt (oder umgekehrt) bewegt und das Dickenprofil des Messobjektes aufgenommen. Der anfängliche Justagefehler ändert sich über die Traversierbreite nicht mehr, d.h. der Fehler ist konstant und unabhängig von der x-Richtung.

Die beiden Abstandssensoren können auch in einem O-Rahmen eingebaut werden. Hierbei sind die Sensoren jeweils auf einer Achse montiert und werden z.B. über Zahnriemen von einem Motor verfahren. Mechanisch bedingt ändert sich der zuvor diskutierte Laserjustage-Fehler gegenüber dem C-Rahmen zusätzlich in Abhängigkeit auch noch abhängig von der Position der Sensoren in Traversierrichtung.

Die Ausrichtung der Sensoren würde keinen weiteren Messfehler verursachen, könnte man sicherstellen, dass sich das Messobjekt immer in derselben Position relativ zu den Sensoren befindet. Da in realer Produktionsumgebung jedoch immer Abweichungen in der Positionierung auftreten, ist eine Verkippung des Messobjektes gegenüber den Sensoren üblich. Für sich gesehen ist eine Bestimmung einer solchen Verkippung mit Hilfe von Liniensensoren aus der Praxis bekannt, mit deren Kenntnis eine Kalibrierung stattfindet.

Die bekannte Lösung ist jedoch insoweit nachteilig, als die dort verwendeten Sensoren exakt zueinander auszurichten sind. Sobald ein Versatz der Sensoren zueinander auftritt, lässt sich der Messfehler nicht mehr korrigieren.

Eine exakte Ausrichtung der Sensoren ist umso schwieriger, je größer die Produktionsanlage ist. Durch unvermeidbare, nicht unerhebliche mechanische Toleranzen können die Messachsen der Sensoren nicht exakt zueinander ausgerichtet werden. Die Verwendung besondere Einstellmittel, zum Beispiel Mikrometerschrauben etc., ist teuer und in der Anwendung aufwändig. Außerdem lässt sich eine solche Feinjustage in rauer Industrieumgebung kaum realisieren.

Der vorliegenden Erfindung liegt daher die Aufgabe zugrunde, ein Verfahren zur Dickenmessung an Messobjekten anzugeben, wonach Messfehler bedingt durch Kippungen des Messobjekts und/oder durch Versatz oder Verkippungen/Winkelfehler der Sensoren auf einfache Weise eliminiert werden.

Voranstehende Aufgabe ist durch ein Verfahren gemäß Anspruch 1 gelöst. Danach ist das erfindungsgemäße Verfahren gekennzeichnet durch die Kompensation eines durch Verkippung des Messobjekts und/oder durch Versatz der Sensoren und/oder durch Verkippung der Sensoren bedingten Messfehlers, wobei der Versatz und/oder die Verkippung durch Kalibrierung ermittelt und die berechnete Dicke bzw. das berechnete Dickenprofil entsprechend korrigiert wird. Erfindungsgemäß wird eine Kalibrierung des Versatzes oder der Verkippung der Sensoren durchgeführt. Zudem ist die Aufgabe durch eine Vorrichtung gemäß Anspruch 13 gelöst.

Eine Kalibrierung von Dickenfehlern bei Verkippung des Messobjektes bei Messung mit Punktsensoren ist prinzipiell nicht möglich, da die Verkippung des Messobjektes nicht feststellbar ist. Daher werden für hochpräzise Dickenmessung Laser-Liniensensoren verwendet, womit auch die Verkippung des Messobjektes festgestellt werden kann. Alternativ können auch flächenhaft messende Sensoren (z.B. Kameras) oder mehrere Punktsensoren verwendet werden. Aus den Messwerten von mindestens zwei Sensoren, die gegen eine Oberfläche messen, kann die Verkippung in einer Achse bestimmt werden. Bei zwei Achsen sind entsprechend mindestens drei Sensoren erforderlich.

Am Beispiel einer Dickenmessung von Bandmaterial mit einem O-Rahmen wird das Verfahren nachfolgend verdeutlicht.

Im O-Rahmen befinden sich oberhalb und unterhalb des Bandmaterials Linearachsen, die quer zur Produktionsrichtung Laser-Liniensensoren über die Ober- bzw. Unterseite des Bandmaterials verlaufen. Die Sensoren messen den Abstand zur Ober- bzw. Unterseite. Durch den bekannten Abstand der Sensoren wird das Dickenprofil des Bandmaterials quer zur Traversierrichtung bestimmt. Im Folgenden sind die Koordinatenachsen wie folgt bezeichnet:

y-Achse:    Transportrichtung bzw. Bewegungsrichtung des Band-materials
x-Achse:    Quer zur Transportrichtung, in Richtung der Traversierung
z-Achse:    Senkrecht auf das Bandmaterial, in Richtung der Abstandsmessung der Sensoren

Die Achsen der Laser-Liniensensoren sind in x-Richtung ausgerichtet und sollten idealerweise exakt deckungsgleich an jeder Stelle im Messspalt übereinanderliegen. Aus den bereits bekannten Gründen ist dies nicht oder nur mit erheblichen Aufwand darstellbar. Stattdessen wird der Versatz der Sensoren während einer Kalibrierfahrt bestimmt und dann das berechnete Dickenprofil korrigiert.

Bei einer Verkippung des Messobjekts in x-Richtung ergibt sich folgende Situation:
Eine Kompensation des Verkippungsfehlers der Dicke kann nur erfolgen, wenn der Laserpunkt genau ausgerichtet ist. Bereits ein Fehler der Laserjustage von 0,1 mm verursacht einen Fehler von 18 $\mu$m bei 10° Verkippung. Somit kann die ermittelte Dicke dünner errechnet werden. Eine Verkippung des Messobjektes müsste die Dicke erhöhen. Sind die Sensoren jedoch nicht exakt übereinander angeordnet, so kann sich die ermittelte Dicke auch verringern.

Da die Forderung nach einer idealen Ausrichtung der Sensoren mechanisch nicht zu erfüllen ist, kompensiert eine geeignete Software den daraus resultierenden Fehler rechnerisch wie folgt:

   1. Mastermessung mit einem geeigneten Kalibriermittel, z.B. einem Endmaß ("Masterteil") bei 0° Verkippung. Damit ist die Konstante "Gap" der Dickenberechnungsformel bekannt.
   2. Berechnung des Offsets (= verursacht durch fehlerhafte Laserjustage FL) bei Verkippung 10° .. 20° in x-Richtung.
   3. Berechnung des Offsets bei Verkippung -10° .. -20° in x-Richtung.

Da die Dicke des dabei verwendeten Endmaßes bekannt ist, kann bei bekanntem Verkippungswinkel und Gap-Wert der Offset (= FL) in x-Richtung errechnet werden. Dieser ist für positive und negative Winkel leicht unterschiedlich.

Für Anwendung in einem C-Rahmen ist aufgrund der festen Montage der Sensoren der Versatz nur einmal festzustellen.

Bei Nutzung eines O-Rahmens werden die Sensoren mittels zweier Linearachsen bewegt. Daher ist der ermittelte x-Offset nicht konstant, bzw. nur an der Position richtig, an der die Offsetberechnung durchgeführt worden ist. Der Versatz der Sensoren kann z.B. durch geringfügig unterschiedliche Geschwindigkeiten der Linearachsen in Traversierrichtung voneinander abweichen. Um den x-Offset abhängig von der Position in Traversierrichtung ermitteln zu können, wird zunächst eine Kompensationsfahrt durchgeführt. Erfindungsgemäß wird während der Kompensationsfahrt ein geeignetes Kalibriermittel, beispielsweise ein Endmaß bekannter Dicke (Masterteil), in den Messspalt geschwenkt und über die gesamte Traversierbreite des Messspalt verfahren.

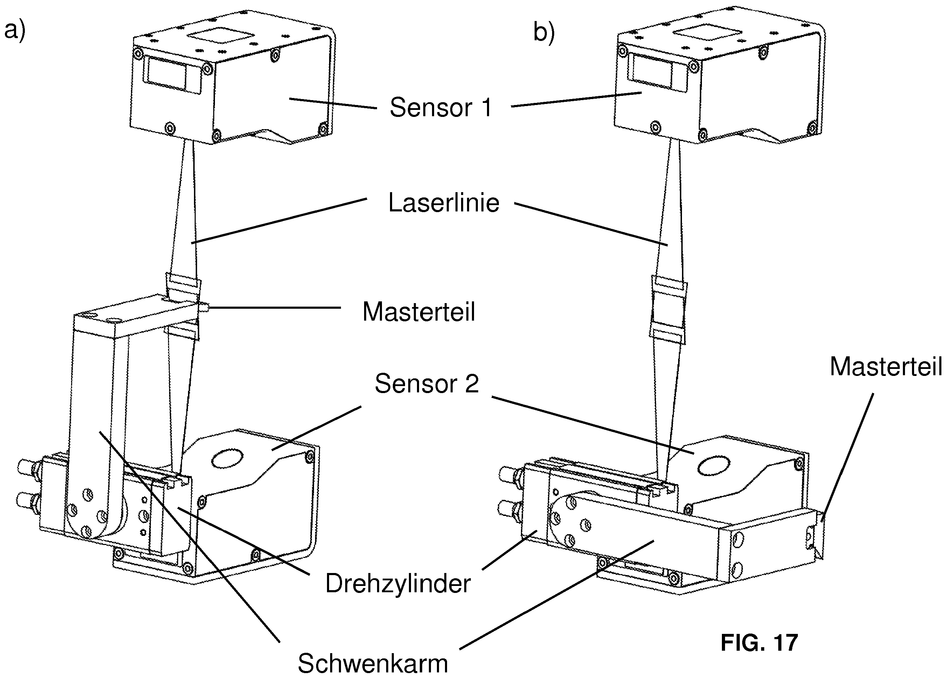

Das Masterteil ist mit einem der beiden Traversierschlitten, die die Sensoren tragen, verbunden. Dies kann entweder der obere oder der untere Schlitten sein. Das Masterteil ist mit dem unteren Schlitten mittels eines erfindungsgemäßen Schwenkmechanismus verbunden (Figur 17). Der Schwenkmechanismus enthält einen pneumatischen Drehzylinder, der einstellbare Endlagen besitzt. Durch die Einstellung der Endlagen kann die exakte Ausrichtung des Masterteils für die Kompensationsfahrt eingestellt werden. Am Drehzylinder sitzt ein Schwenkarm, an dem wiederum das Masterteil montiert ist. Das Masterteil ist ein Endmaß mit bekannter Dicke. In einer Endlage ist das Masterteil innerhalb des Messspalts exakt eingeschwenkt (Fig. 17 a), in der anderen Endlage komplett aus dem Messspalt ausgeschwenkt (Fig. 17 b). Im Idealfall ist das Masterteil so ausgerichtet, dass die Laserlinie genau senkrecht auftrifft. Mit Hilfe des Drehzylinders wird das Masterteil für die Kompensationsfahrt derart in den Messspalt eingeschwenkt, dass oberer und unterer Sensor gegen die obere und untere Oberfläche des Masterteils messen. Das Einschwenken kann von Zeit zu Zeit wiederholt werden, womit die Einstellung der Sensoren zueinander überprüft werden kann, bzw. eine neue Kompensationsfahrt durchgeführt werden kann. Für das Einschwenken können auch andere Zustellmittel gewählt werden, z.B. elektrische oder magnetische Antriebe. Auch ein Einschwenken per Hand wäre denkbar, erfordert jedoch dann einen Benutzereingriff.

Die Traversierung in x-Richtung mit eingeschwenktem Masterteil bekannter Dicke $D_{Master}$, das nicht verkippt ist ($\alpha = 0°$), ergibt die Messwerte $S1_{Master}$ und S2Master für den Sensor 1 (oben) und Sensor 2 (unten). Es ist anzumerken, dass die Messwerte S1 und S2 aus einer Schar von Messpunkten bestehen, die die Laserlinie beschreiben. Bei üblichen Laser-Liniensensoren werden z.B. 640 Messpunkte in x-Richtung genutzt. Die Anzahl der Messpunkte hängt von der Pixelanzahl der verwendeten CCD-Matrix ab. Der Einfachheit halber sei im Folgenden jedoch von Messwerten S1 und S2 die Rede.

Das Masterteil ist mechanisch am unteren Schlitten (am unteren Sensor) befestigt, d.h. der x-Offset des unteren Sensors zum Masterteil sollte immer Null ergeben. Das Masterteil wird so justiert, dass jeder Sensor eine Kante des Masterteils erkennt, d.h. die Laserlinie erstreckt sich über die Kante hinaus. Der Sensor zeigt somit nur z.B. 620 Messpunkte von 640 an. Da das Masterteil relativ zum unteren Sensor fixiert ist, würde eine Ausrichtung nur des oberen Sensors genügen.

Aus den Messpunkten, die auf der Fläche des Masterteils liegen, wird zunächst Gap als Funktion von x, d.h. von der Position während der Traversierung, bestimmt:

$$Gap = Gap(x) = D_{Master} + S1_{Master} + S2_{Master}$$

Der Grund ist der, dass sich auch der z-Abstand der Sensoren über die Traversierbreite aufgrund von mechanischen Toleranzen etc. ändern kann. Dies wird mit der Kompensationsfahrt ermittelt, so dass der Fehler in z-Richtung damit kompensiert ist. Die Messwerte können als Funktion von x oder als Look-up-table gespeichert werden. Diese Kompensation in z-Richtung ist Grundvoraussetzung für jede Dickenmessung ist Stand der Technik.

Während der Kompensationsfahrt wird zusätzlich die Kante des Masterteils in Abhängigkeit von der Position in Traversierrichtung (= x-Richtung) aufgezeichnet.

Dadurch, dass vom Masterteil mit Bestimmung der Kante ein absoluter Messwert in x-Richtung zur Verfügung steht, kann der Versatz FL des oberen Sensors relativ zum unteren Sensor bestimmt werden: FL = FL(x).

Im Idealfall wäre der Versatz der Sensoren zumindest an der Startposition (x=0) gleich Null, wenn nämlich die Sensoren zumindest an dieser Stelle ideal zueinander ausgerichtet und justiert wären. Voraussetzung wäre, dass alle Parameter der Positionen der Sensoren und des Masterteils bekannt sind und auch die Messwerte der Sensoren relativ zum Gehäuse bzw. zur Montageposition der Sensoren bekannt sind. Daraus kann dann z.B. bereits für die Startposition der Kompensationsfahrt der Versatz FLo = FL(x=0) bestimmt werden. Da jedoch auch hier eine Vielzahl von Einflussgrößen wirken, ist es einfacher, den Versatz an der Startposition (x=0) als zunächst unbekannte Konstante FLo festzusetzen und an einer beliebigen Position in x-Richtung den tatsächlichen Versatz zu bestimmten.

Ist man der Einfachheit halber zunächst nur an der Abweichung des Versatzes interessiert, so erhält man bei der Kompensationsfahrt die Funktion FL'(x) = dFL(x) (Werte wieder als Funktion von x oder in Look-up-table), indem $FL_0$ zunächst definitionsgemäß gleich Null gesetzt und dies später herausgerechnet wird.

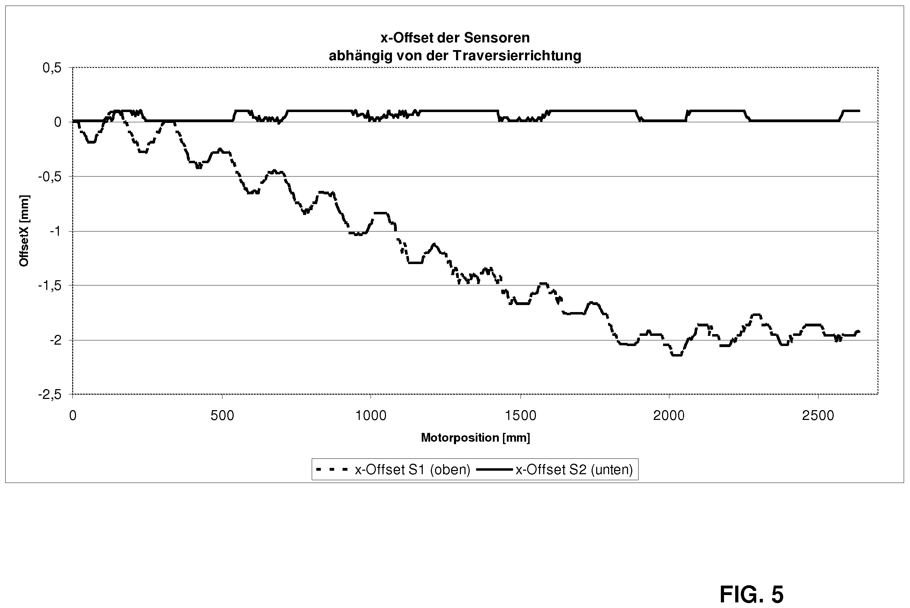

Figur 5 zeigt den so ermittelten x-Offset in Abhängigkeit der Position in Traversierrichtung.

Am Anfang der Kalibrierfahrt bei Position x=0 ist der Offset FL gleich Null, da an dieser Stelle definitionsgemäß der Nullpunkt gesetzt wird. Je weiter die beiden Sensoren über ihre jeweilige Linearachse in Taversierrichtung bewegt werden, umso größer wird der x-Offset, bis gegen Ende der Bewegung der Wert konstant bleibt. Der Offset zeigt noch eine überlagerte Sinusschwingung, die vom Antrieb der Linearachsen herrührt. Man erkennt, dass der x-Offset bei einer Traversierbreite von 2500mm bis zu 2 mm betragen kann. Der Versatz könnte im Laufe der Traversierung auch

EP 2 909 577 B1

wieder kleiner werden, dies hängt auch von der Art und Weise der Bewegung der Achsen oder der Montage der Sensoren ab.

Die Kalibrierung der Verkippung wird dann in Form eines Verkippungstests an einer Stelle $x_0$ innerhalb des Traversierbereichs mit verschiedenen Verkippungen (z. B. $\alpha$ = +/-10°, +/- 20°) des Masterteils durchgeführt. Damit erhält man den absoluten Versatz an der Kalibrierposition FL = $FL_{kali}(x_0)$.

Figur 3 zeigt die geometrischen Verhältnisse beim Verkippungstest. Zunächst muss über den Verkippungstest an der Stelle $x_0$ aus der bekannten Verkippung des Masterteils bekannter Dicke $D_{Master}$ der Versatz/die Verkippung $FL_{kali}(x_0)$ durch folgende Berechnung bestimmt werden:

$$D_{Master} = D` * \cos(\alpha) \qquad (1)$$

Dabei ist D' noch nicht der tatsächliche gemessene Wert D" = Gap - (S1 + S2) der Dickenmessung, sondern der bereits um den Versatz der Sensoren korrigierte Wert (siehe Figur 3):

$$D` = Gap – (S1`+S2). \qquad (2)$$

Darin ist S1' der bereits um den Versatz FL korrigiert Messwert, für den gilt:

$$S1` = S1 –FL* \tan(\alpha). \qquad (3)$$

Mit den tatsächlichen Messwerten für Sensor 1 (S1) und Sensor 2 (S2) und der bekannten Dicke des Mastertargets $D_{Master}$ kann also an der Kalibrierposition xo der Versatz $FL_{kali}(x_0)$ bestimmt werden.

Der (über die Traversierbreite veränderliche) Versatz setzt sich allgemein zusammen aus

$$FL(x) = FL_0 + dFL(x),$$

wobei die Funktion dFL(x) aus der Kompensationsfahrt bekannt ist.

An der Kalibrierposition $x_0$ wird gemäß obiger Vorschrift der tatsächliche absolute Versatz wie folgt gemessen:

$$FL(x_0) = FL_{kali}(x_0) = FL_0 + dFL(x_0)$$

Daraus kann $FL_0$ bestimmt werden durch

$$FL_0 = FL_{kali}(x_0) - dFL(x_0)$$

Schließlich ergibt sich der über die Traversierbreite veränderliche Versatz der Sensoren zu

$$FL(x) = FL_0 + dFL(x) = FL_{kali}(x_0) - dFL(x_0) + dFL(x)$$

Wird die Kalibrierung an der Startposition, d.h. $x_0$ = 0 durchgeführt, gilt unmittelbar:

$$FL_0 = FL_{kali}(x=0).$$

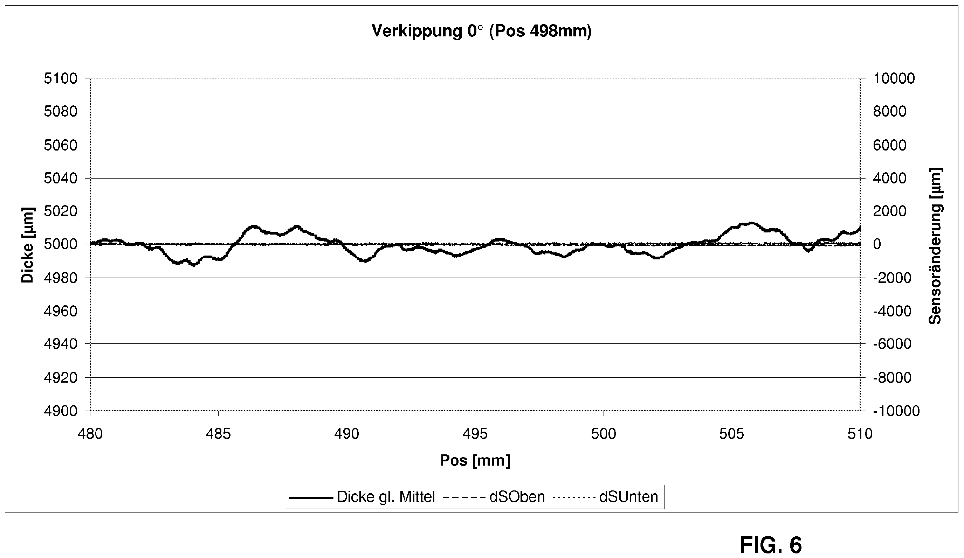

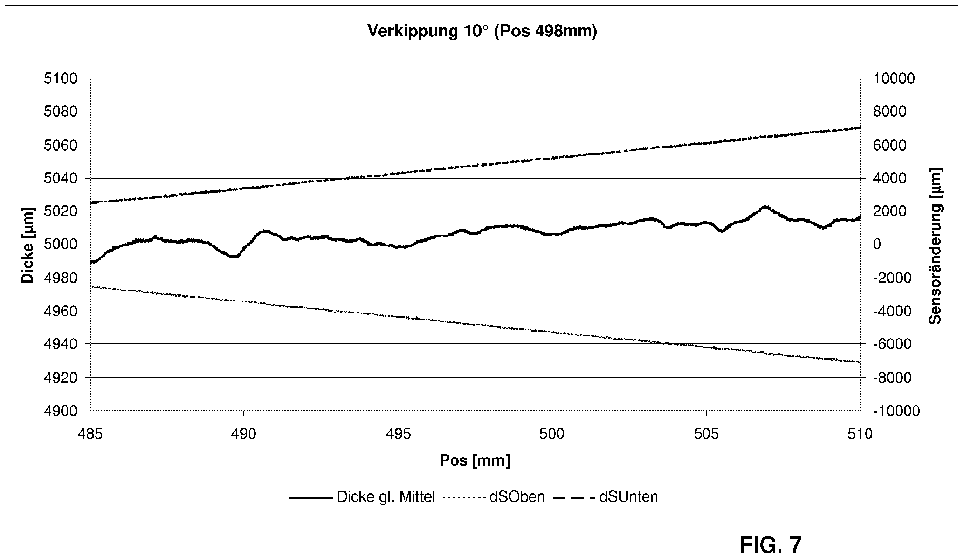

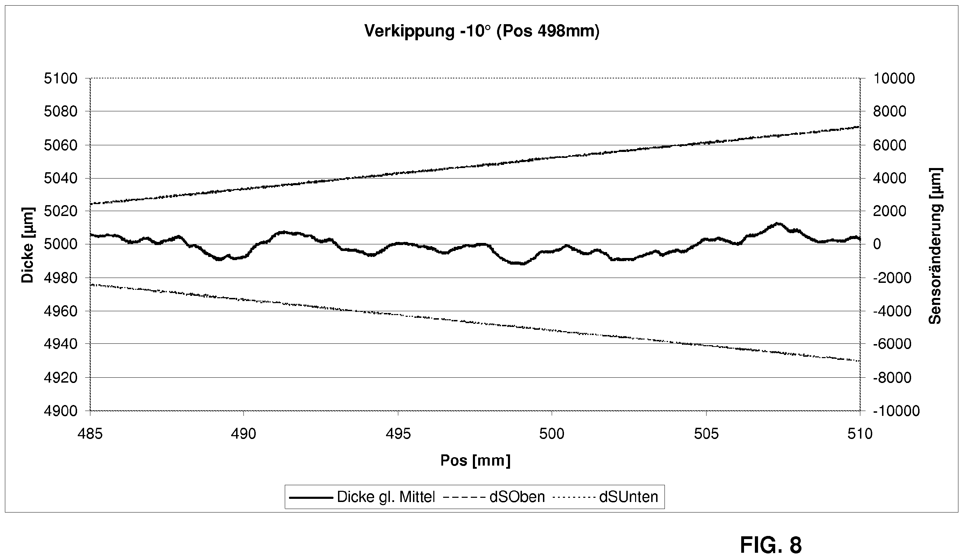

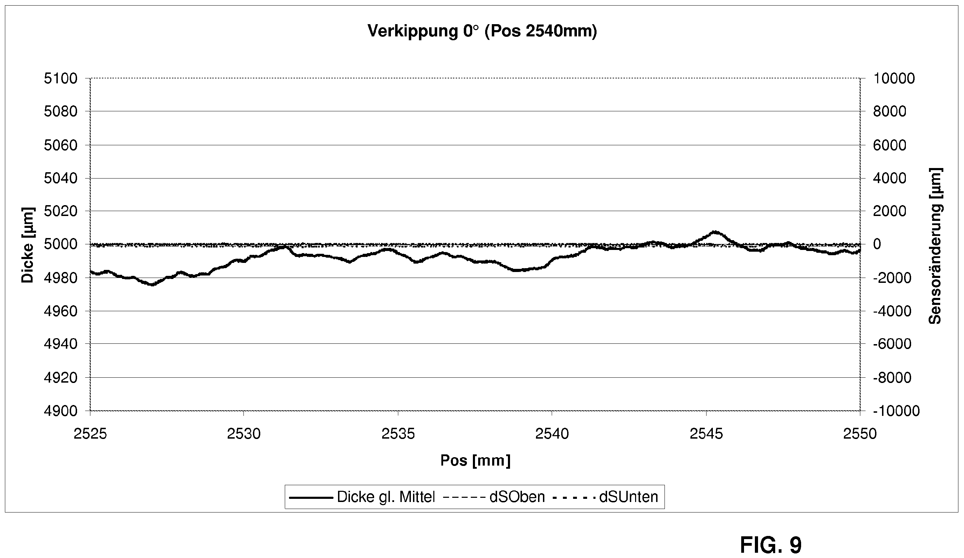

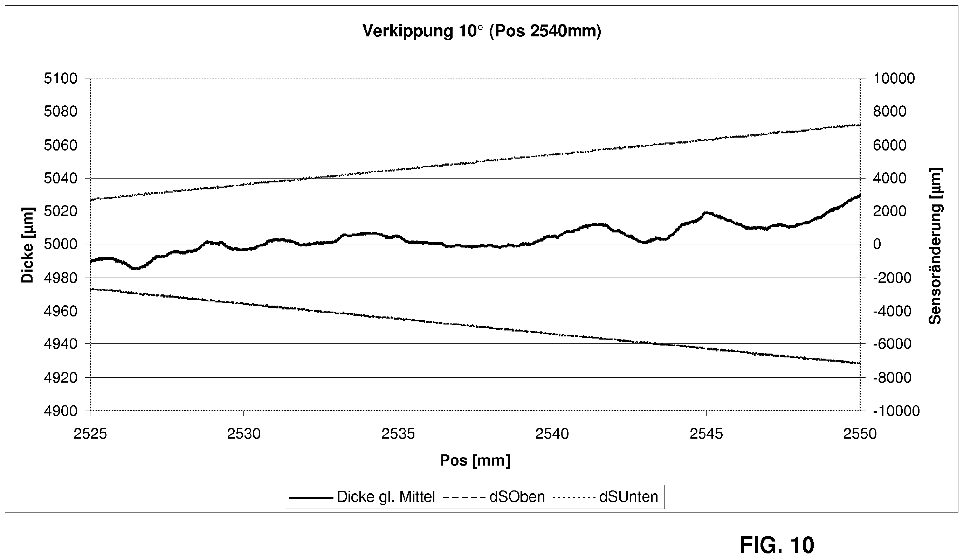

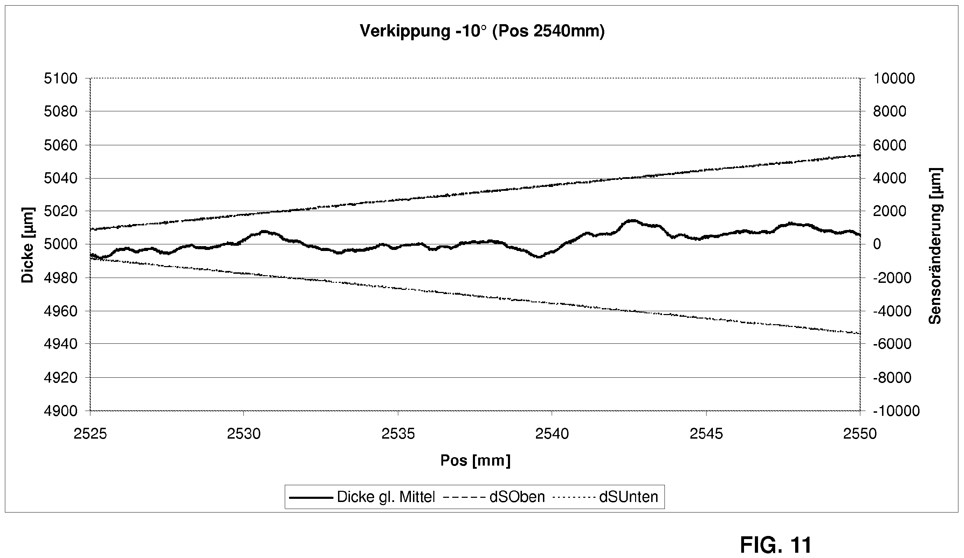

Der Verkippungstest liefert unter Bezugnahme auf die Figuren 6 bis 11 folgende Ergebnisse:
Die Figuren 6 bis 11 zeigen das Rohsignal der ermittelten Dicke bei einer Verkippung der Masterteils (Dicke = 5,004 mm) von +/- 10°. Die rechnerische Dicke, verursacht durch die Verkippung des Messobjektes, beträgt bei 10° Verkippung 5,081 mm. Die Bestimmung des Laserjustage-Fehlers FL wurde bei einer Traversierungsposition von 498 mm durchgeführt. Die Dicke ist jeweils links aufgetragen, die Sensoränderungen an der rechten Y-Achse.

Die Figuren 6 bis 11 zeigen im Detail:

Figur 6: Verkippung des Messobjektes um 0°, Traversierungsposition (x-Richtung) bei 498 mm

Figur 7: Verkippung des Messobjektes um 10°, Traversierungsposition (x-Richtung) bei 498 mm

Figur 8: Verkippung des Messobjektes um -10°, Traversierungsposition (x-Richtung) bei 498 mm

Figur 9: Verkippung des Messobjektes um 0°, Traversierungsposition bei (x-Richtung) 2540 mm

Figur 10: Verkippung des Messobjektes um 10°, Traversierungsposition (x-Richtung) bei 2540 mm

Figur 11: Verkippung des Messobjektes um -10°, Traversierungsposition (x-Richtung) bei 2540 mm

In ganz analoger Weise kann damit für ein Messobjekt unbekannter Dicke die tatsächliche Dicke bestimmt werden, indem nicht nur der Verkippungsfehler, sondern auch der Fehler durch den Versatz/die Verkippung der Sensoren kompensiert wird.

Zunächst werden die tatsächlichen Messwerte S1 und S2 aufgezeichnet. Aus S1 muss der um den Versatz/die Verkippung der Sensoren korrigierte Wert S1' berechnet werden:

$$S1` = S1 - FL * \tan(\alpha)$$

Mit dem um den Versatz korrigierten Wert S1'erhält man dann die Dicke D'

$$D` = Gap - (S1` + S2).$$

Für die tatsächliche Dicke des Messobjektes gilt dann analog zu (1)

$$D = D` * \cos$$

Bei einer Verkippung in y-Richtung, d.h. in Produktionsrichtung, ergibt sich folgendes:
Um eine Verkippung des Messobjekts in Produktionsrichtung (y-Richtung) kompensieren zu können, gelten die gleichen Voraussetzungen wie zuvor beschrieben. Die Verkippung des Messobjektes in y-Richtung muss dafür ebenfalls messtechnisch ermittelt werden. Denkbar ist auch ein weiterer Liniensensor oder ein Punktsensorpaar, der/das die Verkippung in y-Richtung bestimmt. Es sei klargestellt, dass die Laserlinien der für die Dickenmessung verwendeten Sensoren nach wie vor in x-Richtung ausgerichtet sind. Der Versatz/die Verkippung der Sensoren in y-Richtung wirkt sich jedoch ganz analog auf die Dickenmessung aus, wenn das Messobjekt in y-Richtung verkippt.

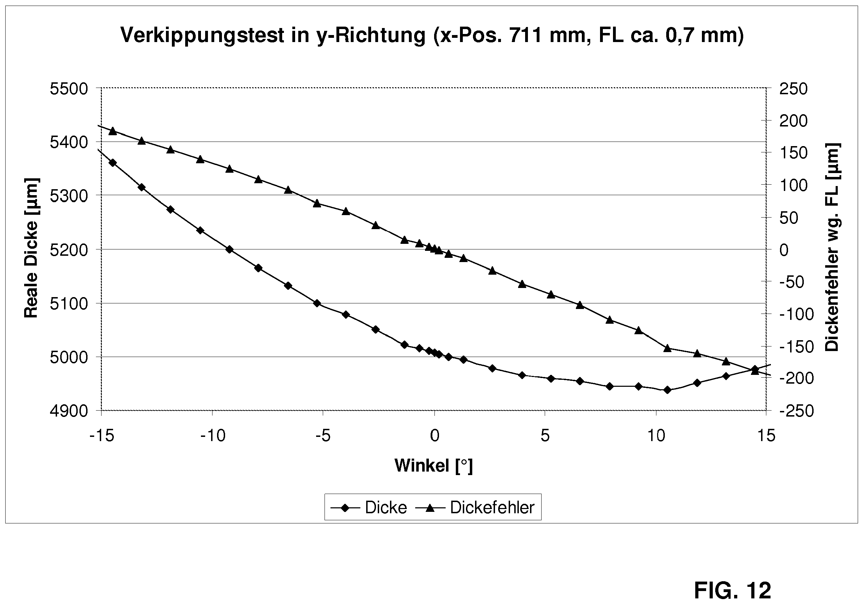

Figur 12 zeigt den Messfehler, wenn die Achsen der Sensoren nicht übereinander liegen (Fehler Laserjustage FL ca. 0,7 mm, Solldicke 5,004 mm). Auf der linken y-Achse ist die gemessene Dicke aufgetragen, rechts der Dickenfehler, der nur durch die fehlerhafte Laserjustage verursacht wird. Auch hier verkippen die Sensoren in Abhängigkeit von der x-Position, allerdings in y-Richtung. Daher wird in ganz analoger Weise an einer Stelle $x_0$ der Laserjustage-Fehler FL der beiden Sensoren berechnet. Während der Kompensationsfahrt wird die Änderung dieses Fehlers aufgenommen.

Wie zur Verkippung des Messobjekts in x-Richtung beschrieben, wird auch hier der reale Fehler der Laserjustage berechnet, nämlich wie folgt:

1. Mastermessung des Endmaßes bei 0° Verkippung. Damit ist die Konstante "Gap" der Dickenberechnungsformel bekannt.
2. Berechnung des Offsets (verursacht durch fehlerhafte Laserjustage FL) bei Verkippung 10° .. 20° in y-Richtung.
3. Berechnung des Offsets bei Verkippung -10° .. -20° in y-Richtung.

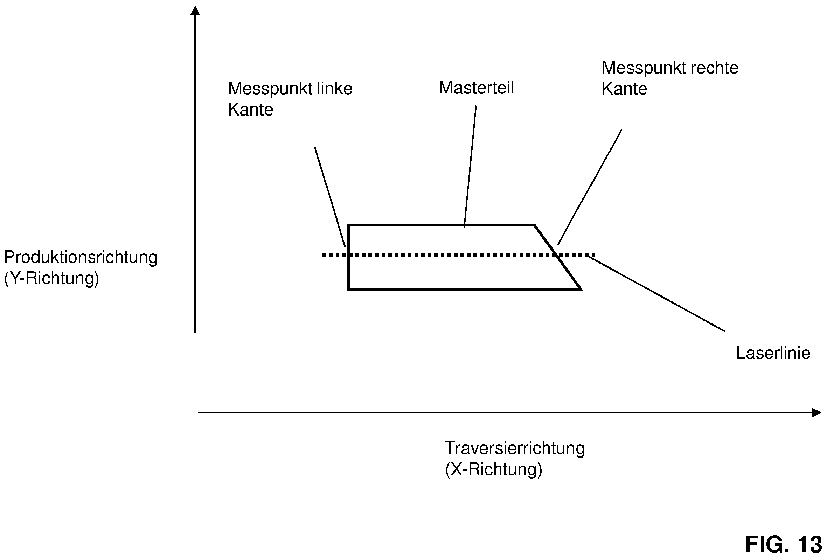

Die Änderung des Laserjustage-Fehlers für die y-Richtung wird während der Kompensationsfahrt aufgezeichnet (= eingeschwenktes Mastertarget, Verfahren der Traversiereinheit in x-Richtung). In besonders einfacher Weise kann dies mit demselben Masterteil durchgeführt werden, indem dieses an der für die Kompensation des x-Versatzes gegenüberliegenden Seite eine schräge Kante aufweist. Damit ist eine Kante bezeichnet, deren Orientierung von der Senkrechten zur Traversierrichtung (= Transportrichtung) abweicht, vorzugsweise um 45°. Figur 13 zeigt diesen Zusammenhang. Ändert sich nämlich die Ausrichtung der Sensoren in y-Richtung, überstreicht die Laserlinie die von der Senkrechten zur Traversierrichtung (x-Richtung) abweichende Orientierung der Kante, im Beispiel die 45°-Richtung, wodurch sich der Messwert, nämlich die Länge der Laserlinie auf dem Messtarget ändert. Aus dem Messpunkt, der auf der Kante liegt, oder der Länge der Laserlinie kann somit auf die Verkippung in y-Richtung geschlossen werden.

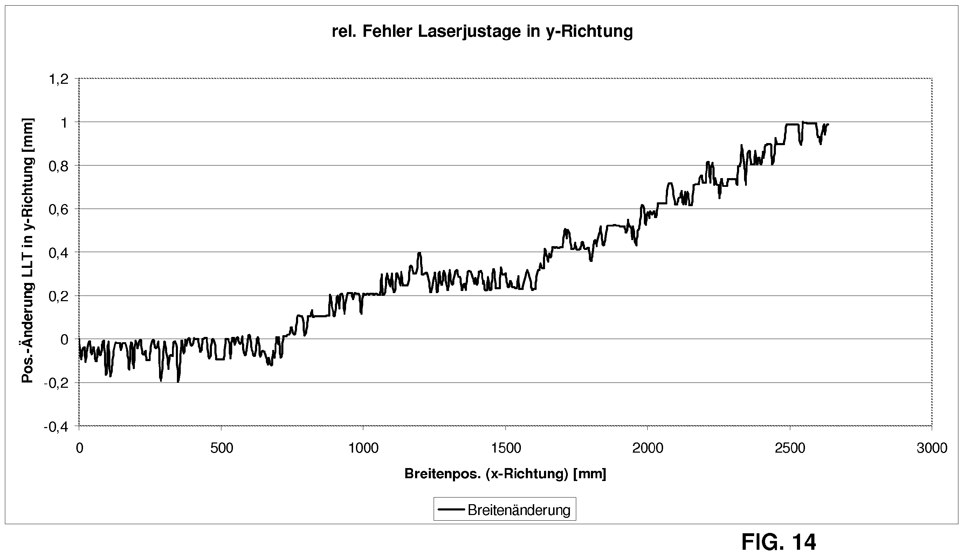

Figur 14 zeigt die Änderung der Laserlinie auf dem Mastertarget in y-Richtung:

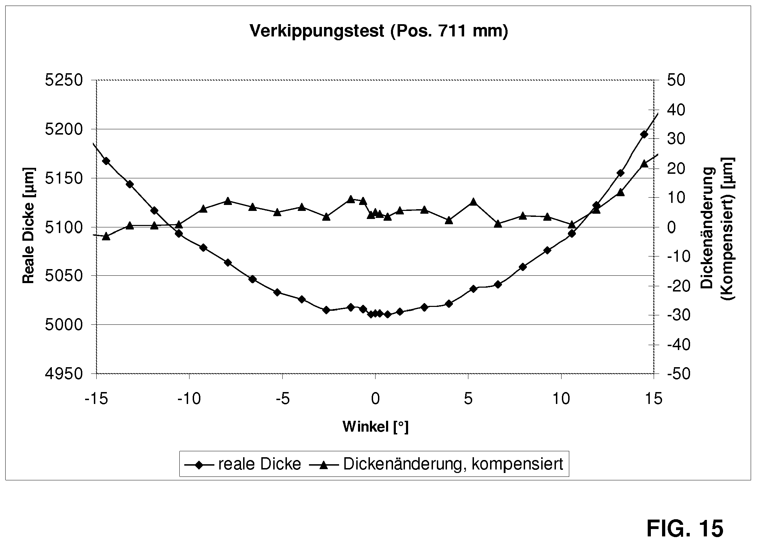

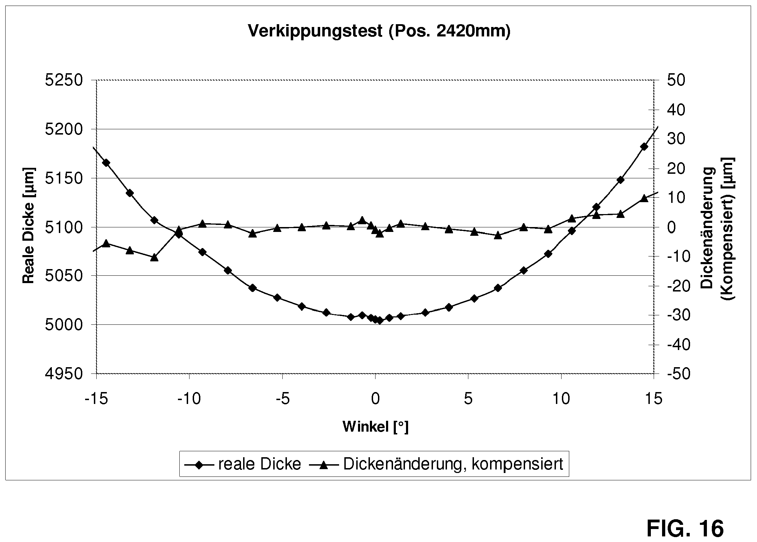

Figur 15 und 16 zeigen das Ergebnis nach erfolgreicher Kompensation des Verkippungsfehlers.

Die Werte in Figur 15 sind an der Stelle der aufgenommen, an der der Fehler der Laserjustage bestimmt wurde. Figur 16 ist unter Berücksichtigung der Offset-Änderung - ermittelt während der Kompensationsfahrt - aufgenommen.

Auf der linken y-Achse ist jeweils die ermittelte, reale Dicke ohne Berücksichtigung des Winkelfehlers aufgetragen. Die rechte y-Achse zeigt die Dickenänderung, korrigiert um den Winkelfehler unter Berücksichtigung des Laserjustage-Fehlers FL.

Es gibt verschiedene Möglichkeiten, die Lehre der vorliegenden Erfindung in vorteilhafter Weise auszugestalten und weiterzubilden. Dazu ist einerseits auf die abhängigen Ansprüche und andererseits auf die vorstehende Erläuterung bevorzugter Ausführungsbeispiele des erfindungsgemäßen Verfahrens anhand der Zeichnung zu verweisen. In Verbindung mit der Erläuterung der bevorzugten Ausführungsbeispiele des erfindungsgemäßen Verfahrens anhand der Zeichnung sind auch im Allgemeinen bevorzugte Ausgestaltungen und Weiterbildungen der Lehre erläutert. Die Zeichnung umfasst folgende Figuren

Fig. 1   in einer schematischen Ansicht das Prinzip der Dickenmessung mit einem Paar gegen das Messobjekt messenden Abstandssensoren (Stand der Technik),

Fig. 2   in einem schematischen Diagramm den Messfehler, der bei einer Verkippung des Messobjekts entsteht,

Fig. 3   in einer schematischen Ansicht das Prinzip der Dickenmessung mit zwei gegenüberliegenden Laser-Ab-standssensoren, die zueinander versetzt angeordnet sind,

Fig. 4   in einem schematischen Diagramm die Entwicklung des Messfehlers, der ausschließlich durch eine fehlerhafte Justage der Sensoren bedingt ist,

Fig. 5   in einem schematischen Diagramm den ermittelten x-Offset in Abhängigkeit der Position in Richtung der Traversierung (x-Richtung),

Fig. 6 bis 11   in einem schematischen Diagramm das Rohsignal der er-mittelnden Dicke bei einer Verkippung des Endmaßes (Masterteil),

Fig. 12   in einem schematischen Diagramm den Messfehler, der entsteht, wenn die Achsen der Sensoren in y-Richtung nicht übereinander liegen,

Fig. 13   in einer schematischen Darstellung den Zusammenhang betreffend Laserjustage-Fehler in x-Richtung (linke Kante) und y-Richtung (durch Auswertung des Messwertes an der Kante bzw. der Länge der Laserlinie unter Nutzung einer 45°-Kante),

Fig. 14   in einem schematischen Diagramm die Änderung der Laserlinie auf dem Mastertargets zum Nachweis der Änderungen der Sensorposition in y-Richtung,

Fig. 15 und 16   in einem schematischen Diagramm das Ergebnis einer erfolgreichen Kompensation des Verkippungsfehlers und

Fig. 17   in einer schematischen Ansicht das Prinzip des Einschwenkens eines Masterteils in den Messspalt mittels eines Drehaktors, beispielsweise pneumatischer Drehzylinder oder Elektromotor.

Hinsichtlich weiterer vorteilhafter Ausgestaltungen des erfindungsgemäßen Verfahrens wird zur Vermeidung von Wiederholungen auf den allgemeinen Teil der Beschreibung sowie auf die beigefügten Patentansprüche verwiesen.

Schließlich sei ausdrücklich darauf hingewiesen, dass die voranstehend beschriebenen Ausführungsbeispiele des erfindungsgemäßen Verfahrens lediglich zur Erörterung der beanspruchten Lehre dienen, diese jedoch nicht auf das Ausführungsbeispiele einschränken. Die Erfindung ist durch die Ansprüche definiert.

**Patentansprüche**

1.  Verfahren zur Dickenmessung an sich in eine Transportrichtung bewegbaren Messobjekten, wobei mindestens ein Sensor von der Oberseite und mindestens ein weiterer Sensor von der Unterseite gegen das Objekt misst und bei bekanntem Abstand der Sensoren zueinander die Dicke des Objekts gemäß der Formel D = Gap - (S1 + S2) berechnet wird,
    wobei D = Dicke des Messobjekts, Gap = Abstand der Sensoren zueinander, S1 = Abstand des oberen Sensors zur Oberseite des Messobjekts und S2 = Abstand des unteren Sensors zur Unterseite des Messobjekts, weiter umfassend die Kompensation eines durch Versatz der Sensoren und/oder durch Verkippung der Sensoren bedingten Messfehlers, wobei der Versatz und/oder die Verkippung der Sensoren durch Kalibrierung mittels eines Kalibriermittels, das eine Kante in einer Traversierrichtung quer zur Transportrichtung aufweist und mittels eines Schwenkmechanismus in den Messbereich ein- und ausgeschwenkt wird, wobei die Position der Kante ausgewertet wird, ermittelt und die berechnete Dicke bzw. das berechnete Dickenprofil entsprechend korrigiert wird.

2. Verfahren nach Anspruch 1, **dadurch gekennzeichnet, dass** der Einfluss des Versatzes und/oder der Verkippung der Sensoren auf die Dickenmessung durch eine Kalibrierfahrt der Sensoren in Längsrichtung und/oder in Querrichtung zum Messobjekt, vorzugsweise in Transportrichtung und Traversierrichtung, ermittelt wird.

3. Verfahren nach Anspruch 2, **dadurch gekennzeichnet, dass** die berechnete Dicke bzw. das berechnete Dickenprofil des Messobjekts anhand der Daten aus der Kalibrierfahrt korrigiert wird.

4. Verfahren nach einem der Ansprüche 1 bis 3, **dadurch gekennzeichnet, dass** als Sensoren Linien-Sensoren, insbesondere Laser-Liniensensoren, verwendet werden, so dass eine Verkippung in einer Achse oder in zwei Achsen bestimmbar ist.

5. Verfahren nach einem der Ansprüche 1 bis 3, **dadurch gekennzeichnet, dass** als Sensoren je Seite mindestens zwei oder drei Punktsensoren verwendet werden, so dass die Verkippung in einer Achse oder in zwei Achsen bestimmbar ist.

6. Verfahren nach Anspruch 4 oder 5, **dadurch gekennzeichnet, dass** auf einer Seite Liniensensoren und auf der anderen Seite mehrere Punktsensoren verwendet werden.

7. Verfahren nach einem der Ansprüche 1 bis 6, **dadurch gekennzeichnet, dass** die Sensoren in einem C-Rahmen bei fester Montage/Zuordnung der Sensoren oder in einem O-Rahmen bei einer Anbindung an beweglichen Linearachsen bewegt werden.

8. Verfahren nach einem der Ansprüche 1 bis 7, **dadurch gekennzeichnet, dass** bei einer Verkippung in x-Richtung, d.h. quer zur Transportrichtung, eine Kompensation des Messfehlers durch folgende Verfahrensschritte erfolgt:

   - Durchführung einer Mastermessung an einem Endmaß bei 0° Verkippung,
   - Berechnung des Offsets aufgrund fehlerhafter Sensorjustage bei Verkippung um vorgebbare Winkel, vorzugsweise um 10° bis 20° und -10° bis -20° in x-Richtung quer zur Transportrichtung, in Richtung der Traversierung der Sensoren, wobei bei bekanntem Verkippungswinkel und Gap-Wert der Offset in x-Richtung errechnet wird.

9. Verfahren nach Anspruch 8, **dadurch gekennzeichnet, dass** bei zumindest geringfügig unterschiedlichen Geschwindigkeiten der Linearachsen in Traversierrichtung eine Ermittlung des x-Offset in Abhängigkeit der Position in Traversierrichtung ermittelt wird, dadurch, dass während der Kompensationsfahr ein Endmaß bekannter Dicke in den Messspalt geschwenkt und über die gesamte Breite des Messspalts verfahren wird.

10. Verfahren nach Anspruch 9, **dadurch gekennzeichnet, dass** das Endmaß am unteren Sensor, vorzugsweise an einem Schlitten befestigt wird, so dass der x-Offset des unteren Sensors zum Endmaß Null ergibt, dass das Endmaß derart justiert wird, dass der obere Sensor eine Kante des Endmaßes erkennt, und dass während der Kompensationsfahrt die Kante des Endmaßes in Abhängigkeit von der Position in Traversierrichtung aufgezeichnet wird, so dass aufgrund der Bestimmung der Kante vom Endmaß absolute Messwerte in x-Richtung zur Verfügung stehen, anhand derer der Versatz des oberen Sensors zum unteren Sensor berechnet werden kann.

11. Verfahren nach einem der Ansprüche 1 bis 10, **dadurch gekennzeichnet, dass** bei einer Verkippung in y-Richtung, d.h. in Transportrichtung, eine Kompensation des Messfehlers durch folgende Verfahrensschritte erfolgt:

   - Durchführung einer Mastermessung an einem Endmaß bei 0° Verkippung,
   - Berechnung des Offsets aufgrund fehlerhafter Sensorjustage bei Verkippung um vorgebbare Winkel, vorzugsweise um 10° bis 20° und -10° bis -20° in y-Richtung, d.h. in Transportrichtung, wobei bei bekanntem Verkippungswinkel und Gap-Wert der Offset in y-Richtung errechnet wird.

12. Verfahren nach Anspruch 11, **dadurch gekennzeichnet, dass** während der Kompensationsfahrt die Änderung des Sensorjustage-Fehlers in y-Richtung aufgezeichnet wird, wobei das Endmaß eine Kante aufweist, deren Orientierung von der Senkrechten zur Traversierrichtung abweicht, vorzugsweise um 45°, so dass eine Änderung des Messwertes auf der Kante eine Verkippung des Sensors in Transportrichtung definiert.

**13.** Vorrichtung zur Dickenmessung an sich in eine Transportrichtung bewegbaren Messobjekten, mit mindestens zwei Sensoren, wobei mindestens ein Sensor von der Oberseite und mindestens ein weiterer Sensor von der Unterseite gegen das Objekt misst und bei bekanntem Abstand der Sensoren zueinander die Dicke des Objekts gemäß der Formel D = Gap - (S1 + S2) berechnet wird, wobei D = Dicke des Messobjekts, Gap = Abstand der Sensoren zueinander, S1 = Abstand des oberen Sensors zur Oberseite des Messobjekts und S2 = Abstand des unteren Sensors zur Unterseite des Messobjekts, weiter umfassend ein Schwenkmechanismus und ein mittels des Schwenkmechanismus in den Messbereich ein-und ausschwenkbares Kalibriermittel zur Kompensation eines durch Versatz der Sensoren und/oder durch Verkippung der Sensoren bedingten Messfehlers, wobei das Kalibriermittel eine Kante in einer Traversierrichtung quer zur Transportrichtung aufweist und wobei die Vorrichtung eingerichtet ist die Position der Kante auszuwerten.

**14.** Vorrichtung nach Anspruch 13, **dadurch gekennzeichnet, dass** das Kalibriermittel zusätzlich eine Kante aufweist, deren Orientierung von der Senkrechten zur Traversierrichtung abweicht, insbesondere um 45°, und wobei die Vorrichtung eingerichtet ist die Position der Kante auszuwerten.

## Claims

**1.** Method for thickness measurement on measurement objects which can be moved in a transport direction, wherein at least one sensor from the upper side and at least one other sensor from the lower side measures with respect to the object and, when the spacing of the sensors with respect to each other is known, the thickness of the object is calculated in accordance with the formula D = Gap - (S1 + S2), wherein D = thickness of the measurement object, Gap = spacing of the sensors with respect to each other, S1 = spacing of the upper sensor with respect to the upper side of the measurement object and S2 = spacing of the lower sensor with respect to the lower side of the measurement object, further comprising the compensation of a measurement error which is brought about by the offset of the sensors and/or by a tilting of the sensors, wherein the offset and/or the tilting of the sensors is established by means of calibration using a calibration means which has an edge in a traversing direction transverse relative to the transport direction and is pivoted into and out of the measurement region by means of a pivot mechanism, wherein the position of the edge is evaluated, and the calculated thickness or the calculated thickness profile is corrected accordingly.

**2.** Method according to claim 1, **characterised in that** the influence of the offset and/or the tilting of the sensors on the thickness measurement is established by means of a calibration travel of the sensors in a longitudinal direction and/or in a transverse direction relative to the measurement object, preferably in a transport direction and traversing direction.

**3.** Method according to claim 2, **characterised in that** the calculated thickness or the calculated thickness profile of the measurement object is corrected with reference to the data from the calibration travel.

**4.** Method according to any one of claims 1 to 3, **characterised in that** line sensors, in particular laser line sensors, are used as sensors so that a tilting can be determined in one axis or in two axes.

**5.** Method according to any one of claims 1 to 3, **characterised in that** for each side at least two or three point sensors are used as sensors so that the tilting can be determined in one axis or in two axes.

**6.** Method according to claim 4 or 5, **characterised in that** on one side line sensors and on the other side a plurality of point sensors are used.

**7.** Method according to any one of claims 1 to 6, **characterised in that** the sensors are moved in a C-shaped frame in the case of fixed assembly/association of the sensors or in an O-shaped frame in the case of a connection to movable linear axes.

**8.** Method according to any one of claims 1 to 7, **characterised in that**, in the case of tilting in an x direction, that is to say, transversely relative to the transport direction, a compensation of the measurement error is carried out by means of the following method steps:

- carrying out a master measurement on a gauge block with 0° tilting,
- calculating the offset as a result of erroneous sensor adjustment during tilting through predeterminable angles, preferably through from 10° to 20° and -10° to -20° in the x direction transversely relative to the transport direction, in the traversing direction of the sensors, wherein, when the tilting angle and the gap value are known, the offset in the x direction is calculated.

9. Method according to claim 8, **characterised in that**, at at least slightly different speeds of the linear axes in the traversing direction, an establishment of the x offset depending on the position in the traversing direction is established **in that**, during the compensation travel, a gauge block of known thickness is pivoted into the measurement gap and is displaced over the entire width of the measurement gap.

10. Method according to claim 9, **characterised in that** the gauge block is secured to the lower sensor, preferably to a sliding member, so that the x offset of the lower sensor with respect to the gauge block is zero, **in that** the gauge block is adjusted in such a manner that the upper sensor identifies an edge of the gauge block and **in that** during the compensation travel the edge of the gauge block is recorded in accordance with the position in the traversing direction so that, as a result of the determination of the edge of the gauge block, absolute measurement values are available in the x direction, with reference to which the offset of the upper sensor with respect to the lower sensor can be calculated.

11. Method according to any one of claims 1 to 10, **characterised in that**, in the event of tilting in the y direction, that is to say, in the transport direction, a compensation of the measurement error is carried out by means of the following method steps:

- carrying out a master measurement at a gauge block with 0° tilting,
- calculating the offset as a result of incorrect sensor adjustment during tilting through predeterminable angles, preferably through from 10° to 20° and -10° to -20° in the y direction, that is to say, in a transport direction, wherein, when the tilting angle and gap value are known, the offset in the y direction is calculated.

12. Method according to claim 11, **characterised in that**, during the compensation travel, the change of the sensor adjustment error in the y direction is recorded, wherein the gauge block has an edge whose orientation deviates from the perpendicular relative to the traversing direction, preferably through 45°, so that a change of the measurement value defines on the edge a tilting of the sensor in the transport direction.

13. Device for thickness measurement on measurement objects which can be moved in a transport direction, having at least two sensors, wherein at least one sensor from the upper side and at least one other sensor from the lower side measures with respect to the object and, when the spacing of the sensors with respect to each other is known, the thickness of the object is calculated in accordance with the formula D = Gap - (S1 + S2), wherein D = thickness of the measurement object, Gap = spacing of the sensors with respect to each other, S1 = spacing of the upper sensor with respect to the upper side of the measurement object and S2 = spacing of the lower sensor with respect to the lower side of the measurement object, further comprising a pivot mechanism and a calibration means which can be pivoted into and out of the measurement region by means of the pivot mechanism in order to compensate for a measurement error which is brought about by means of offset of the sensors and/or by tilting the sensors, wherein the calibration means has an edge in a traversing direction transverse relative to the transport direction and wherein the device is configured to evaluate the position of the edge.

14. Device according to claim 13, **characterised in that** the calibration means additionally has an edge whose orientation from the perpendicular relative to the traversing direction deviates, in particular through 45°, and wherein the device is configured to evaluate the position of the edge.

**Revendications**

1. Procédé pour la mesure d'épaisseur sur des objets mesurés mobiles dans une direction de transport, dans lequel au moins un capteur mesure l'objet du côté supérieur et au moins un autre capteur mesure l'objet du côté inférieur et, lors d'une distance connue des capteurs entre eux, l'épaisseur de l'objet est calculée selon la formule D = Gap - (S1 + S2), dans laquelle D = épaisseur de l'objet mesuré, Gap = distance entre les capteurs, S1 = distance entre le capteur supérieur et le côté supérieur de l'objet mesuré et S2 = distance entre le capteur inférieur et le côté inférieur de l'objet mesuré, comprenant en outre la compensation d'une erreur de mesure due au décalage des capteurs et/ou au basculement des capteurs, dans lequel le décalage et/ou le basculement des capteurs est déterminé par le calibrage d'un moyen de calibrage, qui comprend une arête dans une direction transversale à la direction de transport et qui est pivoté vers l'intérieur et vers l'extérieur au moyen d'un mécanisme de pivotement dans la zone de mesure, dans lequel la position de l'arête est analysée, et l'épaisseur calculée respectivement le profil d'épaisseur calculé est corrigé en conséquence.

2. Procédé selon la revendication 1, **caractérisé en ce que** l'influence du décalage et/ou du basculement des capteurs sur la mesure de l'épaisseur est déterminée grâce à un déplacement de calibrage des capteurs dans la direction longitudinale et/ou dans la direction transversale vers l'objet mesuré, de préférence dans la direction de transport et la direction transversale.

3. Procédé selon la revendication 2, **caractérisé en ce que** l'épaisseur calculée respectivement le profil d'épaisseur calculé à l'aide des données provenant du déplacement de calibrage.

4. Procédé selon l'une des revendications 1 à 3, **caractérisé en ce que** les capteurs utilisés sont des capteurs linéaires, plus particulièrement des capteurs linéaires au laser, de façon à ce qu'un basculement dans un axe ou dans deux axes peut être déterminé.

5. Procédé selon l'une des revendications 1 à 3, **caractérisé en ce que**, en tant que capteurs, de chaque côté, au moins deux ou trois capteurs ponctuels sont utilisés de façon à ce que le basculement dans un axe ou dans deux axes peut être déterminé.

6. Procédé selon la revendication 4 ou 5, **caractérisé en ce que**, sur un côté, des capteurs linéaires sont utilisés et sur l'autre côté, plusieurs capteurs ponctuels sont utilisés.

7. Procédé selon l'une des revendications 1 à 6, **caractérisé en ce que** les capteurs sont déplacés dans un cadre C lors d'un montage/disposition fixe des capteurs ou dans un cadre O lors d'une liaison à des axes linéaires mobiles.

8. Procédé selon l'une des revendications 1 à 7, **caractérisé en ce que**, lors d'un basculement dans la direction x, c'est-à-dire transversalement par rapport à la direction de transport, une compensation de l'erreur de mesure a lieu grâce aux étapes suivantes :

   - réalisation d'une mesure de référence sur une cale étalon lors d'un basculement de 0°,
   - calcul de l'offset sur la base d'un ajustement de capteur erroné lors d'un basculement d'angles pouvant être prédéterminés, de préférence de 10° à 20° et de -10° à -20° dans la direction x transversale par rapport à la direction de transport, en direction de la traversée des capteurs, dans lequel, lors d'un angle de basculement connu et d'une valeur Gap connue, l'offset dans la direction x est calculé.

9. Procédé selon la revendication 8, **caractérisé en ce que**, dans le cas de vitesses au moins légèrement différentes des axes linéaires dans la direction de traversée, une détermination de l'offset x est déterminée en fonction de la position dans la direction de traversée, grâce au fait que, pendant le déplacement de compensation, une cale étalon d'épaisseur connue est pivotée dans l'interstice de mesure et est déplacée sur toute la largeur de l'interstice de mesure.

10. Procédé selon la revendication 9, **caractérisé en ce que** la cale étalon est fixée au capteur inférieur, de préférence à un chariot, de façon à ce que l'offset x du capteur inférieur par rapport à la cale étalon soit nul, à ce que la cale étalon soit ajustée de façon à ce que le capteur supérieur détecte une arête de la cale étalon et à ce que, pendant le déplacement de compensation, l'arête de la cale étalon en fonction de la position dans la direction de traversée soit enregistrée, de façon à ce que, sur la base de la détermination de l'arête de la cale étalon, des valeurs de mesure absolues dans la direction x soient disponibles, à l'aide desquelles le décalage du capteur supérieur par rapport au capteur inférieur peut être calculé.

11. Procédé selon l'une des revendications 1 à 10, **caractérisé en ce que**, lors d'un basculement dans la direction y, c'est-à-dire dans la direction de transport, une compensation de l'erreur de mesure a lieu grâce aux étapes suivantes :

   - réalisation d'une mesure de référence sur une cale étalon lors d'un basculement de 0°,
   - calcul de l'offset sur la base d'un ajustement de capteur erroné lors d'un basculement d'angles pouvant être prédéterminés, de préférence de 10° à 20° et de -10° à -20° dans la direction y, c'est-à-dire dans la direction de transport, dans lequel, lors d'un angle de basculement connu et d'une valeur Gap connue, l'offset dans la direction y est calculé.

12. Procédé selon la revendication 11, **caractérisé en ce que**, pendant le déplacement de compensation, la modification de l'erreur d'ajustement de capteur dans la direction y est enregistrée, dans lequel la cale étalon présente une arête dont l'orientation dévie de la perpendiculaire par rapport à la direction de traversée, de préférence de 45°, de façon à ce qu'une modification de la valeur de mesure sur l'arête définisse un basculement du capteur dans la direction de transport.

13. Dispositif de mesure d'épaisseur sur des objets mesurés mobiles dans une direction de transport, avec au moins deux capteurs, dans lequel au moins un capteur mesure l'objet du côté supérieur et au moins un autre capteur mesure l'objet du côté inférieur et, lors d'une distance connue des capteurs entre eux, l'épaisseur de l'objet est calculée selon la formule D = Gap - (S1 + S2), dans laquelle D = épaisseur de l'objet mesuré, Gap = distance entre les capteurs, S1 = distance entre le capteur supérieur et le côté supérieur de l'objet mesuré et S2 = distance entre le capteur inférieur et le côté inférieur de l'objet mesuré, comprenant en outre un mécanisme de pivotement et un moyen de calibrage pouvant être pivoté dans et hors de la zone e mesure, pour la compensation d'une erreur de mesure due au décalage des capteurs et/ou au basculement des capteurs, dans lequel le moyen de calibrage comprend une arête dans une direction de traversée transversale par rapport à la direction de transport et dans lequel le dispositif est conçu pour analyser la position de l'arête.

14. Dispositif selon la revendication 13, **caractérisé en ce que** le moyen de calibrage comprend une arête dont l'orientation s'écarte de la perpendiculaire par rapport à la direction de traversée, plus particulièrement de 45°, et dans lequel le dispositif est conçu pour analyser la position de l'arête.

FIG. 1

Dickenfehler Verkippung für D=3mm

FIG. 2

FIG. 3

EP 2 909 577 B1

Fehler nur durch Laser verursacht

FIG. 4

EP 2 909 577 B1

**x-Offset der Sensoren**
**abhängig von der Traversierrichtung**

- - - x-Offset S1 (oben) —— x-Offset S2 (unten)

**Motorposition [mm]**

OffsetX [mm]

EP 2 909 577 B1

17

**FIG. 5**

FIG. 6

FIG. 7

**Verkippung -10° (Pos 498mm)**

FIG. 8

EP 2 909 577 B1

EP 2 909 577 B1

**Verkippung 0° (Pos 2540mm)**

FIG. 9

**Verkippung 10° (Pos 2540mm)**

FIG. 10

EP 2 909 577 B1

**Verkippung -10° (Pos 2540mm)**

*Dicke gl. Mittel ----- dSOben ·········· dSUnten*

**FIG. 11**

EP 2 909 577 B1

**Verkippungstest in y-Richtung (x-Pos. 711 mm, FL ca. 0,7 mm)**

EP 2 909 577 B1

**FIG. 12**

Messpunkt rechte Kante

Laserlinie

Masterteil

Messpunkt linke Kante

Traversierrichtung (X-Richtung)

Produktionsrichtung (Y-Richtung)

**FIG. 13**

EP 2 909 577 B1

**rel. Fehler Laserjustage in y-Richtung**

**FIG. 14**

**Verkippungstest (Pos. 711 mm)**

*Reale Dicke [µm]* / *Dickenänderung (Kompensiert) [µm]* / *Winkel [°]*

—◆— reale Dicke    —▲— Dickenänderung, kompensiert

**FIG. 15**

FIG. 16

FIG. 17

Sensor 1

Laserlinie

Masterteil

Sensor 2

Drehzylinder

Schwenkarm

Masterteil

a)

b)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009011122 A1